Europäisches Patentamt

European Patent Office

Office européen des brevets

(11) Veröffentlichungsnummer: **0 184 226**
**B1**

## EUROPÄISCHE PATENTSCHRIFT

(45) Veröffentlichungstag der Patentschrift:
**14.09.88**

(21) Anmeldenummer: **85116421.0**

(22) Anmeldetag: **12.10.83**

(60) Veröffentlichungsnummer der früheren Anmeldung
nach Art. 76 EPÜ: **0112448**

(51) Int. Cl.⁴: **B 64 C 39/02,** B 64 D 35/00,
F 42 B 15/10

(54) **Unbemannter Flugkörper.**

(30) Priorität: **05.11.82 DE 3240903**

(43) Veröffentlichungstag der Anmeldung:
**11.06.86 Patentblatt 86/24**

(45) Bekanntmachung des Hinweises auf die Patenterteilung:
**14.09.88 Patentblatt 88/37**

(84) Benannte Vertragsstaaten:
**FR GB IT**

(56) Entgegenhaltungen:
DE - C - 593 104
FR - A - 819 400

**AVIATION WEEK & SPACE TECHNOLOGY, Band 119,
Nr. 3, Juli 1983, Seiten 67,68, New York, US; B.A. SMITH:
"Israeli use bolsters interest in mini-RPVs"**

(73) Patentinhaber: **DORNIER GMBH, Postfach 1420,
D-7990 Friedrichshafen 1 (DE)**

(72) Erfinder: **Friedel, Franz, Uhlandstrasse 6,
D-7991 Oberteuringen (DE)**
Erfinder: **Frühauf, Werner, Unterer Höhenweg 24,
D-7775 Bermatingen (DE)**
Erfinder: **Harms, Günter, Mövenstrasse 12,
D-7990 Friedrichshafen (DE)**
Erfinder: **Heise, Georg, Dipl.-Ing., Spiegelberg 5,
D-7997 Immenstaad (DE)**
Erfinder: **Lükewille, Heinrich, Dipl.-Ing., Zu den Eichen 5,
D-777 Salem 2 (DE)**

(74) Vertreter: **Landsmann, Ralf, Dipl.-Ing., Kleeweg 3,
D-7990 Friedrichshafen 1 (DE)**

ACTORUM AG

## Beschreibung

Die Erfindung betrifft unbemannte Flugkörper, die in einem Behälter transportiert und aus dem Behälter in der Startphase mittels eines Hilfsantriebs nach Lösung einer Arretierung gestartet werden und während des Marschfluges durch ein Propellertriebwerk antreibbar sind.

Flugkörper der genannten Art, wie sie z.B. durch die Zeitschrift Aviation Week & Space Technology, Band 119, Nr. 3, Juli 1983, Seiten 67, 68, New York, USA; B.A.Smith: «Israeli use bolsters interest in mini-RPVs» bekannt sind, werden einzeln in Aufnahmebehältern für den Transport und gleichzeitig für den Start untergebracht. Die Aufnahmebehälter werden in der Art von Batterien neben- und bzw. oder übereinander gestapelt, so z.B. auf Fahrzeugen.

Bei der Aufnahme der Behälter, insbesondere auf Fahrzeugen, spielt der erforderliche Raumbedarf eine wesentliche Rolle. Es muss dabei die sich durch die Stapelung ergebende Schwerpunktslage des Fahrzeuges, ebenso wie die Abmessungen in Höhe und Breite im Hinblick auf Durchfahrtsabmessungen von Bauwerken oder dergleichen berücksichtigt werden.

Die Abmessungen der Abschuss- bzw. Aufnahmebehälter bestimmt sich im wesentlichen durch Teile der Flugkörper, die über die eigentliche Flugkörperaussenkontur hinausragen, so z.B. Trag- bzw. Stabilisierungsflächen bzw. rotierende Propeller des Flugkörperantriebes.

Es ist bereits eine Anordnung bekannt, bei der der Flugkörper in einem Behälter untergebracht ist, dessen Innenabmessungen sich durch den Durchmesser des Propellers des Antriebes und durch Leitwerks- bzw. Tragflächen zur Erzeugung aerodynamischen Auftriebes bestimmen.

Aufgabe der vorliegenden Erfindung ist es, die Abmessungen der Behälter so gering als möglich auszuführen. Die gestellte Aufgabe ist erfindungsgemäss dadurch gelöst, dass zur Koppelung des im Behälter in Ruhelage befindlichen Propellers des Antriebes mit dem laufenden Antriebsmotor eine vom Antrieb betätigbare Reibschlusskupplung vorgesehen ist. Durch eine solche Ausbildung ist es ermöglicht, einen Behälter für den Flugkörper geringstmöglicher Abmessung vorzusehen, wobei die Kupplung zwischen Antriebsmotor und stillstehendem Propeller, nachdem der Flugkörper den Behälter verlassen hat, selbsttätig und ohne weitere Krafteinwirkung auf die Kupplung von aussen erfolgt.

Weitere Merkmale sind aus der Zeichnung und der Beispielsbeschreibung ersichtlich.

In der Zeichnung ist ein Ausführungsbeispiel gemäss der Erfindung dargestellt, das nachfolgend näher beschrieben ist. Es zeigt:

Fig. 1 in perspektivischer, schematischer Darstellung einen Flugkörper in Verbindung mit der Antriebsanlage;

Fig. 1a in schematischer Darstellung und in Perspektive den Flugkörper in Verbindung mit dem Aufnahmebehälter;

Fig. 2 in einem teilweisen Querschnitt durch die Antriebsanlage Einzelheiten der Propellerkupplung in Verbindung mit dem Triebwerk, und

Fig. 3 in einem Ausschnitt aus der Fig. 2 Einzelheiten der Propellerkupplung in Arbeitsstellung.

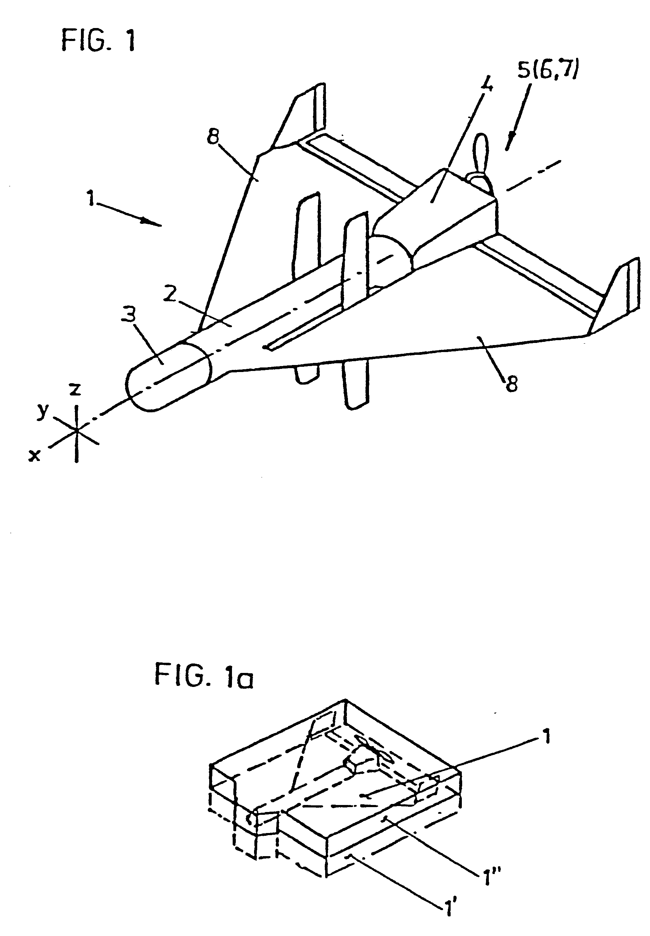

Gemäss der Ausführung nach den Fig. 1 bis 3 ist der Flugkörper insgesamt mit 1, der Flugkörperrumpf mit 2 und der Bugabschnitt des Rumpfes mit 3 bezeichnet. Der Rumpfbug 3 dient hierbei zur Aufnahme einer Zielsucheinrichtung bekannter Bauart.

Ferner dient der rückwärtige Abschnitt des Rumpfes 2 zur Aufnahme der hier aus einem Kolbenmotor 7 zum Antrieb eines Propellers 6 und einer Getriebeeinheit gebildeten Antriebsanlage 5 für den Marschflug. Innerhalb des Rumpfabschnittes 4 ist ferner eine hier nicht dargestellte Startrakete für das Starten des Flugkörpers 1 aus dem Behälter 1' bzw. 1" angeordnet.

In Fig. 1a sind Behälter 1' bzw. 1" gezeigt, die zur Aufnahme je eines Flugkörpers 1 für den Transport und den Start dienen. Es kann eine grössere Anzahl derartiger Behälter, z.B. für die Aufnahme auf einem Kraftfahrzeug über- und nebeneinanderliegend gestapelt angeordnet sein.

Der Start des Flugkörpers 1 aus dem Behälter 1' bzw. 1" erfolgt mit Hilfe der erwähnten Startrakete, wobei der Propeller 6 stillsteht, das Kolbentriebwerk 7 jedoch bereits läuft. Nachdem der Flugkörper 1 seinen Behälter 1' bzw. 1" verlassen hat, übernimmt die Antriebsanlage 5 den Vortrieb für den Marschflug.

Das Tragwerk des Flugkörpers 1 besteht bei dem gezeigten Ausführungsbeispiel aus den Deltaflügeln 8. Im Bereich der Flügelspitzen beider Flügel 8 sind Seitenruderflossen mit verstellbaren Seitensteuerflächen angeordnet. Ferner sind zur Flugkörpersteuerung an der Hinterkante beider Flügel 8, sowohl als Höhen- als auch als Querruder dienende Ruderflächen, verstellbar vorgesehen. Die Steuerung des Flugkörpers 1 um seine Querachse y bzw. um seine Längsachse x wird durch einander überlagernde Steuerbewegungen der Seitensteuerflächen bzw. der Seitensteuerflächen und Querruder in bekannter Weise bewirkt.

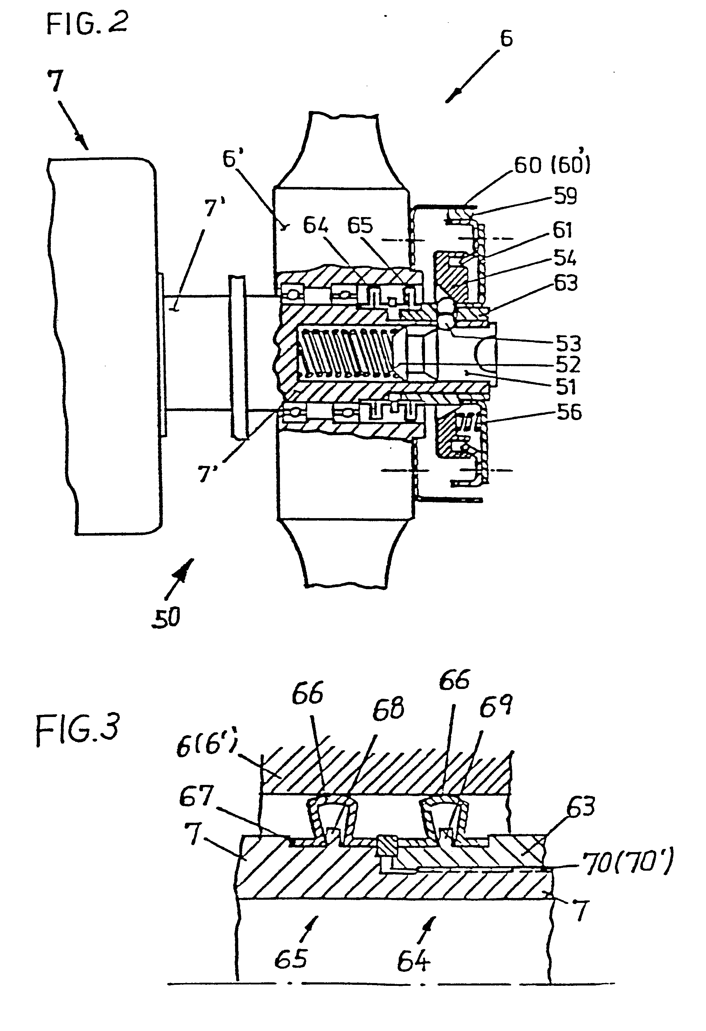

Gemäss Fig. 2 bzw. 3 ist für die Koppelung des Triebwerkes 7 der Antriebsanlage 5 mit dem frei drehbar gelagerten Propeller 6 eine Kupplungseinheit 50 vorgesehen. Die Ausbildung geht davon aus, dass der Flugkörper 1 vor dem Start in seinem Behälter 1' bzw. 1" arretiert ist und die Arretierung (hier nicht dargestellt) beim Start gelöst wird. Die ohne Zufuhr äusserer Energie arbeitende Kupplungseinheit 50 besteht aus einer Auslösevorrichtung, einer mit Hilfe von Fliehkräften wirkenden Schalteinrichtung und einer Reibschlusskupplung zwischen dem frei drehbaren Propeller 6 bzw. dessen Nabe 6' und der Triebwerksausgangswelle 7'. Die Auslösevorrichtung enthält einen, in eine zentrale Bohrung der Triebwerksausgangswelle 7' eingesetzten, axial verstellbaren Schaltbolzen 51, der in der arretierten Lage des Flugkörpers 1 im Behälter 1' bzw. 1" durch eine vorgespannte Schraubendruckfeder 52 in einer Sperrstellung gehalten ist. Ferner sind durch axiale Verstellung des Bolzens 51 betätigbare Sperrelemente 53 vorhanden, die zur Entriegelung eines axial durch vorgespannte Schraubendruckfedern 56 beeinflussbaren Schaltringes 54 dienen.

Mittels des Schaltringes 54 sind radial an einem Trägerteil 61 frei bewegliche Fliehgewichte in Form von Backen 59 angeordnet, die Reibflächen 60 für die Anlage an Gegenflächen 60' an der Propellernabe 6' aufweisen. Die radial beweglichen Backen 59 sind in ihrer Ruhestellung durch den Schaltring 54 arretiert, so dass ein Reibschluss zwischen den Backen 59 und der Propellernabe 6' nicht stattfinden kann. Das Trägerteil 61 ist fest verbunden mit einem zur Triebwerksausgangswelle 7' konzentrischen Mutterteil 63. Dieses Mutterteil ist mittels Gewinde auf ein Gegengewinde (Bewegungsgewinde) der Welle 7' aufschraubbar und somit in Richtung der Längsachse dieser Welle 7' bzw. der Drehachse des Propellers 6 relativ verstellbar.

Die Reibschlusskupplung für die Übertragung des Motormoments auf den Propeller 6 ist eine Kupplung, welche U-förmig ausgebildete Kupplungselemente 64 zwischen der Propellernabe 6' und der Ausgangswelle 7' enthält. Das Kupplungselement 64 ist fest mit dem Mutterteil 63 verbunden.

Ferner ist zwischen dem Mutterteil 63 und der Ausgangswelle 7' und der Propellernabe 6' ein weiteres U-förmiges Kupplungselement 65 für den Reibschluss zwischen der Ausgangswelle 7' und dem Propeller 6 vorgesehen. Das Kupplungselement 65 ist ebenso wie das Kupplungselement 64 betätigbar durch die relative axiale Verstellung des Mutterteiles 63 gegenüber der Welle 7'.

Wie Fig. 3 erkennen lässt, sind die Kupplungselemente 64 bzw. 65 U-förmige Ringteile, die in einem Ringraum zwischen der Bohrung der Nabe 6' des Propellers 6 und der Motorwelle 7' bzw. dem Mutterteil 63 axial nebeneinanderliegen. Dabei weist der Steg 66 für einen Reibschluss mit der Nabe 6' gegen die Bohrungsfläche der Nabe 6', und die Schenkel 67 sind radial zur Längsachse der Kupplung gerichtet. Die Ringteile weisen ferner zylindrische Ansatzabschnitte 67' auf, die in axialer Richtung der Welle 7' aneinander anschliessen. Zwischen den Schenkeln 67 des Elements 65 ist ein Scheibenelement 68 der Welle 7' und zwischen den Schenkeln 67 des Elements 64 ein Scheibenelement 69 des Mutterteiles 63 angeordnet.

Die Wirkungsweise der Kupplungseinheit ist wie folgt: Das Triebwerk 7 wird innerhalb der Vorbereitung für den Start des Flugkörpers 1 aus dem Behälter 1' in Gang gesetzt. Dabei ist der Flugkörper 1 im Behälter 1' arretiert. Der Propeller 6 steht durch die in Neutralstellung befindliche Kupplungseinheit 50 gegenüber der drehenden Motorwelle 7' still. Beim Lösen der Arretierung des Flugkörpers 1 vom Behälter 1' und infolge der Startbewegung des Flugkörpers 1, z.B. mit Hilfe einer Startrakete, verstellt die vorgespannte Schraubendruckfeder 52 den Schaltbolzen 51 in axialer Richtung. Dadurch geben die Sperrelemente 53 den Schaltring 54 für eine axiale Bewegung frei, und der Schaltring wird durch die Wirkung der vorgespannten Schraubendruckfeder 56 in axialer Richtung bewegt. Mittels dieser axialen Bewegung werden die umlaufenden Backen 59 freigegeben und durch die Fliehkraftwirkung radial nach aussen bewegt. Die Flächen 60 der Backen 59 gelangen in Anlage an die Gegenflächen 60' der Propellernabe 6' und bewirken durch den Reibschluss eine Relativdrehung zwischen dem Mutterteil 63 und der Ausgangswelle 7'. Infolgedessen wird das Mutterteil 63 mittels des Gewindeeingriffes 70, 70' axial gegenüber der Ausgangswelle 7' verstellt, und die Kupplungselemente 65 stellen einen Reibschluss zwischen dem Propeller 6 und dem Mutterteil 63 und somit auch mit der Welle 7' her. Das Mutterteil 63 wird in axialer Richtung solange weiterverstellt, bis ein Schlupf zwischen der Ausgangswelle 7' und dem Propeller 6 nicht mehr besteht. Bei dieser axialen Bewegung des Mutterteiles 63 werden auch die Kupplungselemente 65 gespannt und stellen einen direkten Reibschluss zwischen dem Propeller 6 und der Ausgangswelle 7' her.

Im einzelnen ist die Arbeitsweise der Kupplungselemente 64 bzw. 65 so, dass eine axiale Verstellung des Mutterteiles 63 mittels des Gewindes 70 bzw. des Gewindes 70' der Motorwelle 7' ein Andrücken der Schenkel 67 der Ringteile 64 bzw. 65 an die Scheibenelemente 68 bzw. 69 und gleichzeitig ein Aufwölben des Steges 66 bewirkt. Dadurch wird der Reibschluss zwischen der Bohrungsfläche der Nabe 6' und der Welle 7' bzw. dem Mutterteil 63 hergestellt.

Der Kupplungsvorgang findet im wesentlichen statt, nachdem der Flugkörper 1 seinen Startbehälter 1' verlassen hat. Dabei ermöglicht die Kupplungseinheit 50 einen automatischen Ablauf des Kupplungsvorganges zwischen dem stehenden Propeller 6 und dem laufenden Triebwerk 7. Der Einkuppelvorgang läuft ohne Energiezuführung von aussen durch einen Schaltimpuls initiiert selbsttätig ab.

## Patentansprüche

1. Unbemannter Flugkörper, der in einem Behälter transportiert und aus dem Behälter in der Startphase mittels eines Hilfsantriebs nach Lösung einer Arretierung gestartet wird und der während des Marschfluges durch ein Propellertriebwerk antreibbar ist, dadurch gekennzeichnet, dass zur Koppelung des im Behälter (1') in Ruhelage befindlichen Propellers (6) des Antriebes mit dem laufenden Antriebsmotor (7) eine vom Antrieb betätigbare Reibschlusskupplung (64, 65) vorgesehen ist.

2. Flugkörper nach Anspruch 1, dadurch gekennzeichnet, dass als Kupplung eine in Abhängigkeit von der Motordrehzahl betätigbare Fliehkraftkupplung vorgesehen ist.

3. Flugkörper nach Anspruch 1 und 2, dadurch gekennzeichnet, dass die Kupplungsbetätigung über eine in Abhängigkeit vom Motordrehmoment verstellbare Einrückvorrichtung (7', 63) bewirkt wird.

4. Flugkörper nach Anspruch 1 bis 3, dadurch gekennzeichnet, dass die Einrückvorrichtung ein mittels Gewinde (70, 70') in Abhängigkeit vom Motordrehmoment axial gegen die Kupplungselemente (64, 65) verstellbares Mutterteil (63) enthält.

5. Flugkörper nach Anspruch 1 bis 4, dadurch gekennzeichnet, dass das Mutterteil (63) mittels Gewinde (70) aufschraubbar ist auf ein Gegengewinde (70') der Motorausgangswelle (7') und die Kupplungselemente (64, 65) zwischen Mutterteil (63) und Motorausgangswelle (7') bzw. zwischen Motorausgangswelle (7') und Propeller (6) angeordnet sind.

6. Flugkörper nach Anspruch 1 bis 5, dadurch gekennzeichnet, dass das relativ mit der Motorwelle umlaufende Mutterteil (63) fest angeordnete Fliehgewichte (59) mit Anlageflächen (60) für die Anlage an Gegenflächen (60') des Propellers (6) trägt.

7. Flugkörper nach Anspruch 1 bis 6, dadurch gekennzeichnet, dass ein die Fliehgewichte (59) aus ihrer unwirksamen Stellung freigebende Auslösevorrichtung (51, 52, 53, 54) vorgesehen ist.

8. Flugkörper nach Anspruch 1 bis 7, dadurch gekennzeichnet, dass die Auslösevorrichtung einen unter Federwirkung (52) stehenden Schaltbolzen (51) zur Betätigung von Sperrelementen (53, 54) für die Freigabe der Fliehgewichte (59) aus der Ruhelage in Abhängigkeit von der Entriegelung des Flugkörpers (1) gegenüber dem Behälter (1') aufweist.

9. Flugkörper nach Anspruch 1 bis 8, dadurch gekennzeichnet, dass die Kupplungselemente (64, 65) im Querschnitt U-förmige Ringteile sind, deren Schenkel (67) Scheibenelemente der Motorwelle (7') bzw. des Mutterteils (63) zwischen sich einschliessen und dass sich die Ringteile mit ihren Schenkeln (67) axial aneinander und einerseits an der Motorwelle (7') sowie andererseits an der Mutter (63) axial abstützen.

## Claims

1. An unmanned aircraft which is transported in a container, which is launched from the container in a launching phase by means of an auxiliary propulsion unit after a locking device has been released, and which can be driven during cruising flight by a propeller power unit, characterised in that a friction engagement clutch (64, 65) operated by the propulsion unit is provided for coupling the propulsion unit propeller (6) located in the container (1') in the rest position to the running propulsion engine (7).

2. An aircraft according to claim 1, characterised in that a centrifugal clutch which can be operated according to the engine speed is provided as the clutch.

3. An aircraft according to claim 1 and 2, characterised in that the operation of the clutch is effected via an engaging device (7', 63) which can be adjusted according to the engine speed.

4. An aircraft according to claims 1 to 3, characterised in that the engaging device contains a nut component (63) which can be adjusted axially against the clutch components (64, 65) by means of a thread (70, 70') in accordance with the engine speed.

5. An aircraft according to claims 1 to 4, characterised in that the nut component (63) can be screwed on to a counterthread (70') of the engine output shaft (7') by means of a thread (70) and the clutch components (64, 65) are arranged between the nut component (63) and the engine output shaft (7') or between the engine output shaft (7') and the propeller (6).

6. An aircraft according to claims 1 to 5, characterised in that the nut component (63) which rotates relative to the engine shaft carries centrifugal weights (59) in a fixed arrangement with contact surfaces (60) for contact with the counter surfaces (60') of the propeller (6).

7. An aircraft according to claims 1 to 6, characterised in that a release device (51, 52, 53, 54) is provided which releases the centrifugal weights (59) from their inoperative position.

8. An aircraft according to claims 1 to 7, characterised in that the release device is provided with a switching rod (51) which is held under spring action (52) for operating blocking components (53, 54) for releasing the centrifugal weights (59) from the rest position according to the releasing of the aircraft (1) in relation to the container (1').

9. An aircraft according to claims 1 to 8, characterised in that the clutch components (64, 65) comprise in cross section U-shaped annular parts, the sides (67) of which enclose between themselves disc components of the engine shaft (7') and of the nut component (63), and in that the annular parts with their sides (67) are supported axially against one other and on one side axially on the engine shaft (7') and on the other axially on the nut (63).

## Revendications

1. Engin volant sans pilote transporté dans un caisson et lancé, dans la phase de décollage, après déverrouillage d'un dispositif d'arrêt, à partir du caisson au moyen d'un système de propulsion auxiliaire et pouvant être entraîné pendant le vol de croisière au moyen d'un propulseur à hélice, caractérisé en ce que, pour le couplage de l'hélice (6) du système propulseur, en position de repos à l'intérieur du caisson (1'), avec le motopropulseur (7) en marche, il est prévu un accouplement à friction (64, 65) qui peut être actionné par le système propulseur.

2. Engin volant selon la revendication 1, caractérisé en ce qu'un embrayage centrifuge pouvant être actionné en fonction de la vitesse de rotation du moteur est prévu comme dispositif d'accouplement.

3. Engin volant selon l'une des revendications 1 ou 2, caractérisé en ce que l'actionnement de l'accouplement est effectué par l'intermédiaire d'un dispositif d'embrayage (7', 63) déplaçable en fonction du couple moteur.

4. Engin volant selon l'une quelconque des revendications 1 à 3, caractérisé en ce que le dispositif d'embrayage comprend un élément d'écrou (63) qui, au moyen de filetages (70, 70') peut être déplacé axialement par rapport aux éléments d'accouplement (64, 65) en fonction du couple moteur.

5. Engin volant selon l'une quelconque des revendications 1 à 4, caractérisé en ce que l'élément d'écrou (63) pouvant être vissé, au moyen d'un filetage (70), sur un filetage conjugé (70') de l'arbre de sortie (7') du moteur et que les éléments d'accouplement (64, 65) sont disposés entre l'élément d'écrou (63) et l'arbre de sortie (7') du moteur et respectivement entre l'arbre de sortie (7') du moteur et l'hélice (6).

6. Engin volant selon l'une quelconque des revendications 1 à 5, caractérisé en ce que l'élément d'écrou (63) qui tourne avec l'arbre du moteur porte des masselottes (59) montées de manière fixe et présentant des surfaces de contact (60) pour l'application contre des contre-surfaces (60') de l'hélice (6).

7. Engin volant selon l'une quelconque des revendications 1 à 6, caractérisé en ce qu'il comprend un dispositif de déclenchement (51, 52, 53, 54) qui libère les masselottes (59) de leur position non active.

8. Engin volant selon l'une quelconque des revendications 1 à 7, caractérisé en ce que le dispositif de déclenchement comprend une broche de manœuvre (51) commandée par le ressort (52) et destinée à l'actionnement d'éléments d'arrêt (53, 54) pour la libération des masselottes (59) de leur position de repos en fonction du déverrouillage de l'engin volant (1) par rapport au caisson (1').

9. Engin volant selon l'une quelconque des revendications 1 à 8, caractérisé en ce que, vu en coupe transversale, les éléments d'accouplement (64, 65) sont constitués par des éléments annulaires en forme de U dont les branches (67) renferment entre elles des éléments de disque de l'arbre (7') du moteur et respectivement de l'élément d'écrou (63), et que les éléments annulaires s'appuient axialement l'un sur l'autre avec leurs branches (67) ainsi que d'un côté sur l'arbre (7') du moteur et de l'autre côté sur l'écrou (63).

FIG. 1

8

1

5(6,7)

4

2

3

8

z
y
x

FIG. 1a

1

1"

1'

FIG. 2

FIG. 3